# EUROPEAN PATENT SPECIFICATION

(11) **EP 0 324 564 B1**
(45) Date of publication and mention of the grant of the patent: **12.07.1995**
(21) Application number: 89300147.9
(22) Date of filing: 09.01.1989
(51) Int. Cl.: G01S 13/02, G08B 13/24

(54) **System for communicating identification information and the like**
System zur Übertragung der Identifikationsinformation und ähnlicher Daten
Système pour transmettre des informations d'identité et des données analogues

(30) Priority: 14.01.1988 JP 6292/88; 20.01.1988 JP 9993/88
(43) Date of publication of application: 19.07.1989
(73) Proprietor: SONY CORPORATION, Tokyo 141 (JP)
(72) Inventor: Iga, Akira, Shinagawa-ku Tokyo (JP); Oshiba, Katsuyuki, Shinagawa-ku Tokyo (JP)
(74) Representative: Ayers, Martyn Lewis Stanley

(56) References cited:
- EP-A- 0 170 716
- EP-A- 0 254 954
- GB-A- 2 202 415
- US-A- 3 631 484
- US-A- 4 075 632
- US-A- 4 242 663
- US-A- 4 656 472

## Description

The present invention relates to a reflecting type transmitter and more particularly to a transmitter suitably used in an identification system using microwaves.

A system for recognising an article or checking people passing through a gate by receiving an electric wave from a transmitter by using a recognition unit (communicator) has been used in practice. A transmitter used in such a system has a tag- or card-like shape. A reflecting or active type transmitter is used as the transmitter.

As disclosed in USP No 3895368 and the like, a reflecting transmitter comprises an electric reflector antenna in its main body, and sends back an electric wave transmitted from a recognition unit by reflecting it using the antenna.

An active type transmitter incorporates a data generating circuit, a transmitting circuit for transmitting data, and a receiving circuit for receiving an electric wave transmitted from a recognition unit, and can transmit identification data in response to an electric wave from the recognition unit. The recognition unit recognises an article to which the transmitter is attached or a possessor thereof on the basis of this identification data.

The data generating circuit in the transmitter is constituted by a one-chip IC including a memory circuit for generating an identification code. Various types of recognition data are written in the memory circuit depending on the purpose of the transmitter. If permanent recognition data is to be used, the data is written in advance when an IC is manufactured. In a distribution management system such as a home delivery or air cargo system, however, data to be generated by a data generating circuit is changed every time a transmitter is used. In this case, therefore, it is required that a user of a transmitter can write arbitrary data in the memory circuit by using a data programmer.

A reflecting transmitter has a simple arrangement, and hance can be made small in size and manufactured at low cost. However, it cannot generate data. For this reason, the reflecting transmitter cannot be used when complex recognition is required as in the distribution management system used for the home delivery and air cargo systems.

In contrast to this, an active type transmitter can generate data. However, it requires transmitting and receiving circuits, a power source for these circuits and the like.

Furthermore, in order to update data written in the memory circuit, external terminals for bit clock output, data input, and the like must be formed on the tag-like transmitter in advance.

When such a transmitter is used in a distribution system, the external terminals may cause operational failure, and moreover, the cost is increased depending on the number of terminals when the data generating circuit is formed into an IC.

Document US-A-4,075,632 describes an interrogation and detection system, particularly for use with livestock and it is upon this disclosure that the prior art portion of claim 1 is based. It suggests possible ways of dealing with the simultaneous use of two or more reflecting transponders, but these tend to deal with the tags individually rather than distinguish between them as a group.

The present invention has been made in consideration of the above problems, and has as its object to overcome some or all of them.

According to the present invention, there is provided a data transfer system comprising:
an external interrogator device comprising:
a wave generator for generating an electric wave and emitting the same from said interrogator device externally, and
a comparator for receiving external reflections of said electric wave emitted from said wave generator; and
a plurality of portable responder devices, each comprising:
an antenna for reflecting said electric wave emitted from said interrogator device,
a data generator for generating data from a memory means within the responder device to be sent from said responder device to said interrogator device, and
means for changing with time the impedance of said antenna in accordance with said data generated by said data generator, whereby said electric wave reflected by said antenna means is modulated with said data generated by said data generating means;
wherein said comparator receives electric waves reflected by said antennae and compares the same with said electric wave from said wave generator so that said data can be derived from a result of the comparison; characterised in that
the interrogator device is operative to vary the frequency J of said electric wave periodically as a function of time t, the function being J=ω₀+Δω₀t where ω₀ and Δω₀ are constants;
and in that said comparator includes demodulating means for discriminating between simultaneously received reflected waves modulated by individual ones of the responder devices according to reflected frequency.

Since data transmission is performed by utilising the phenomenon that the reflection characteristics of the antenna are changed in accordance with a change in impedance thereof, recognition data can be transmitted without using a transmitting circuit for generating a carrier and a transmission power source.

Furthermore, in order to regenerate a bit clock at the receiver side, the reflecting transmitter according to the present invention may comprise a sync signal generating circuit for periodically outputting sync signals from the antenna, a detecting circuit for detecting a predetermined code signal supplied from the receiver side, and a switching circuit for switching the memory from a read mode to a write mode. With this arrangement, bit-synchronised data, which is supplied immediately after the code signal, is written in the memory as the transmission data.

Since a sync signal used for the regeneration of an internal bit clock is introduced to the antenna, a terminal for outputting a clock signal for bit synchronisation is not required.

In addition, the memory is switched from the read mode to the write mode in response to the predetermined code so that subsequently supplied data can be sequentially written in the memory, thus eliminating a control terminal for switching the read/write mode of the memory.

The invention will be further described by way of non-limitative example with reference to the accompanying drawings, in which:-
Figure 1 is a block diagram showing a reflecting type transmitter as part of an embodiment of the present invention;
Figure 2 is a plan view of an ID tag device;
Figure 3 is a block diagram showing a data transmitting/receiving system;
Figure 4 is a block diagram showing a reflecting type transmitter as part of another embodiment of the present invention;
Figure 5 is a block diagram showing a data generating circuit using a shift register;
Figure 6 is a block diagram showing a transmitting/receiving system using a plurality of transmitters;
Figure 7 is a block diagram showing a data transmitter as part of still another embodiment of the present invention;
Figures 8A and 8B are timing charts for explaining areas of a memory circuit;
Figure 9 is a block diagram showing a modification of the data transmitter;
Figure 10 is a plan view showing a modification of the ID tag device; and
Figures 11A and 11B are timing charts for explaining a modification when a read mode is switched to a write mode.

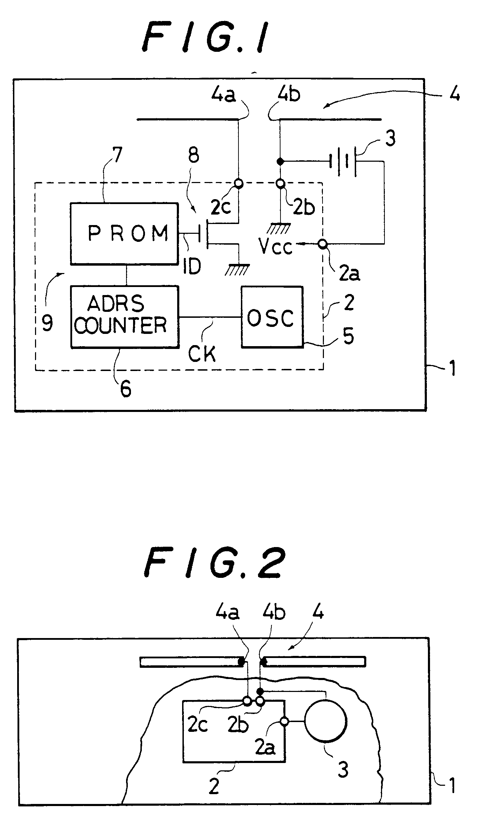

Figure 1 shows an arrangement of a reflecting transmitter as part of an embodiment of the present invention. This transmitter is designed as an ID (identification) tag device. A tag 1 is made of, eg, synthetic resin and has a thin tag-like shape. As shown in the plan view of figure 2, a dipole antenna 4 printed on a flexible board or the like is mounted on a surface of the tag 1. An identification code generator 2 and a battery 3 as a power source for driving the generator 2 are embedded in the tag 1.

The identification code generator 2 is constituted by a one-chip IC in which an oscillator 5, an address counter 6, a memory 7, and an FET 8 are integrated, and has very low power consumption.

The memory 7 is, for example, a programmable ROM (PROM) in which data to be transmitted from the ID tag device is written. More specifically, when the ID tag device is used in, eg, a distribution system, data of the type of goods, a receipt number, the names of receiver and sender, a destination, and the like are coded and written in the memory 7.

The positive and negative electrodes of the battery 3 are directly connected to terminals 2a and 2b of the identification code generator 2, respectively, so as to supply electric power to the generator 2. With this arrangement, a data generating circuit 9 comprising the oscillator 5, the address counter 6 and the memory 7 is always operated, and clock signals ck having a predetermined frequency are always supplied from the oscillator 5 to the address counter 6.

The address counter 6 designates an address in the memory 7, and data written at a designated address is read out. Since the address counter 6 increments its count value every time the clock signal ck is supplied, and designates the next address, data written in the memory 7 are sequentially read out. The readout data are supplied to the gate electrode of the FET 8 as an identification code ID constituted by digital signals. Since the potential at the gate electrode is changed to a high or low potential in accordance with the contents (data) of the identification code ID, the FET 8 is ON/OFF operated in accordance with the identification code ID.

The source electrode of the FET 8 is grounded while the drain electrode is connected to a terminal 2c of the generator 2. With this arrangement, the impedance between the terminals 2b and 2c is changed upon ON/OFF operation of the FET 8. The terminals 2b and 2c are connected to power supply points 4a and 4b of the antenna 4.

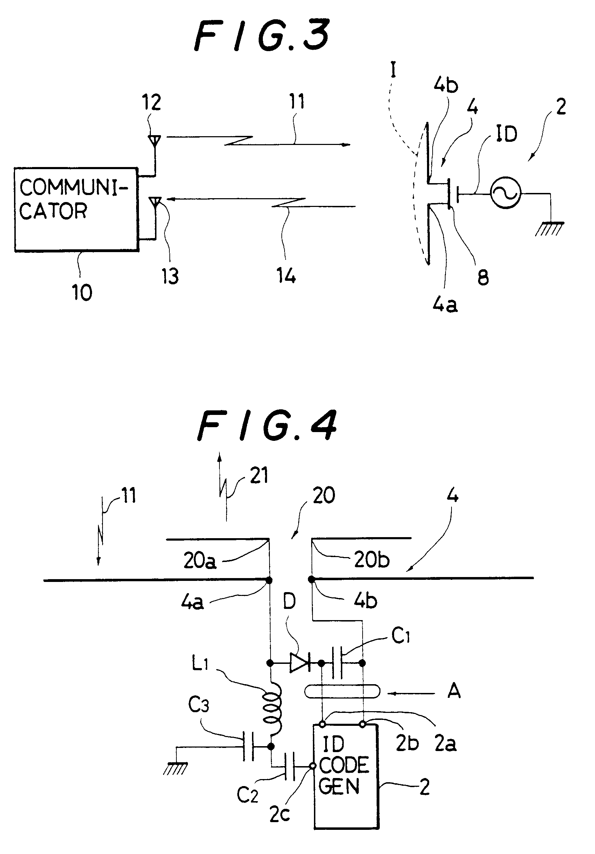

As shown in a block diagram of fig 3, upon reception of a continuous transmission wave 11 in a microwave range emitted from a communicator 10 which serves as a recognition unit, a voltage is induced in the dipole antenna 4, and hence a reception current I flows. As a result, the received electric wave, ie, the transmission wave 11 emitted from the communicator 10, is re-emitted from the dipole antenna 4 as a reflected wave 14. The communicator 10 receives the reflected wave 14 by using a reception antenna 13 and demodulates it.

The impedance between terminals 2b and 2c (power supply points 4a and 4b) is changed in accordance with the ON/OFF operation of the FET 8. When the FET 8 is turned on, the impedance between the power supply points 4a and 4b becomes a value, for example, 50 (Ω), at which the dipole antenna 4 is matched with the transmission wave 11 of 2.45 GHz. When the FET 8 is turned off, the impedance between the power supply points 4a and 4b becomes, for example, 100 (Ω), so that mismatching between the wave 11 and the dipole antenna 4 occurs. The reflection characteristics of the dipole antenna 4 are changed depending on whether matching is achieved or not. Therefore, the phase or amplitude of the reflected wave 14 when matching is achieved differs from that of the reflected wave 14 when mismatching occurs. That is, the ID tag device phase-modulates or amplitude-modulates a received electric wave, ie, transmission wave 11 from the communicator 10 by ON/OFF operating the FET 8 and supply the modulated wave to the communicator 10 by reflecting it. Subsequently, in the communicator 10, the transmission wave 11 and the reflected wave 14 are compared with each other to perform phase or amplitude demodulation, thereby obtaining data.

As described above, since the matching state of the dipole antenna corresponds to the ON/OFF state of the FET 8, and the ON/OFF state thereof corresponds to the identification code ID, the communicator 10 can detect the identification code ID. Accordingly, a carrier for transmitting the identification code ID to the communicator 10 need not be generated in the ID tag device, and hence a transmitting circuit and a power source for transmission are not required in the ID tag device. In addition, since the reflected wave 14 is automatically generated upon reception of the transmission wave 11 from the communicator 10, a receiving circuit for transmitting the identification code ID in response to the transmission wave 11 from the communicator and a power source for signal reception are not required.

Since only the identification code generator 2 in the ID tag side consumes power, power consumption is as low as, for example, 1»A. Therefore, the ID tag device can be continuously operated for about one year by using a button battery having a small capacity of about 10 mA/h.

This ID tag device can be used in various fields by changing data to be written in the memory 7. If, for example, personal data is written, the ID tag device can be used in a management system for people passing through a gate. In this case, the tag 1 is preferably formed into a card-like shape.

Note that in place of the dipole antenna 4, another antenna, eg, a microstrip antenna may be used.

Figure 4 is a circuit diagram showing the main part of a reflecting transmitter as part of another embodiment of the present invention. In this transmitter, a series circuit consisting of a diode D and a capacitor C₁ is connected between power supply points 4a and 4b of a dipole antenna 4, and the node of the diode D and the capacitor C₁ is connected to a terminal 2a of an identification code generator 2. The other terminal (supply power point 4b) of capacitor C₁ is connected to a terminal 2b.

The transmission wave 11 from the communicator 10 received by the dipole antenna 4 is doubled due to the squaring characteristic of the diode D, and a second order harmonic of the transmission wave 11 is re-emitted from the ID tag device as a reflected wave 21. In this embodiment, a transmission pole antenna 20 which resonates with the second-order harmonic is arranged in the device, and power supply points 20a and 20b are respectively connected to the power supply points 4a and 4b of the dipole antenna 4. With this arrangement, the second-order harmonic can be efficiently re-emitted.

On the other hand, the transmission wave 11 from the communicator 10 received by the dipole antenna 4 is rectified by the diode D and charges the capacitor C₁. As a result, a voltage is generated across the capacitor C₁ as indicated by an arrow A, and this voltage is applied to the identification code generator 2 through the terminals 2a and 2b. The voltage generated at the portion indicated by the arrow A varies depending on an electric field intensity at a reception point. In the normal state, the voltage ranges from several mV to several V, and hence can be sufficiently great as to operate the generator 2.

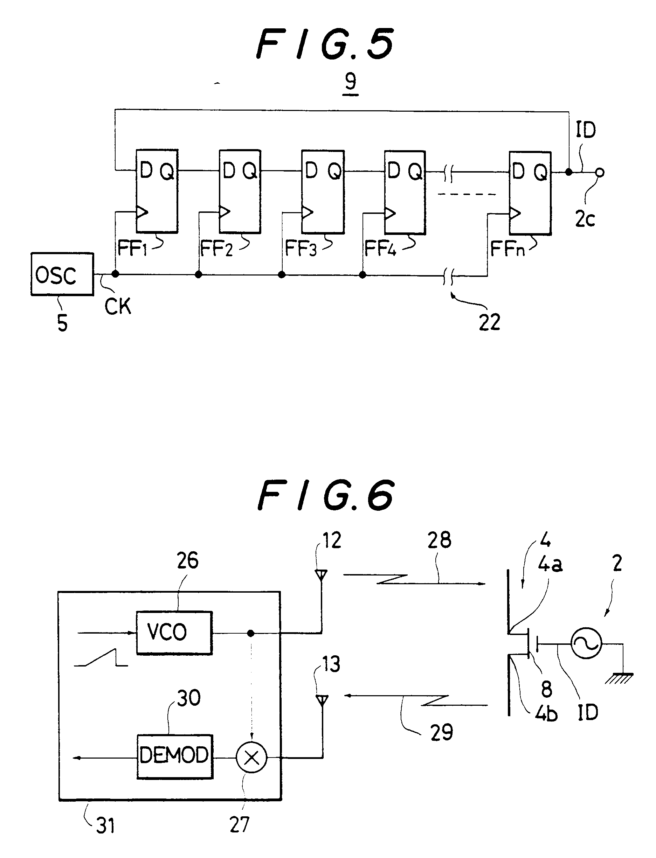

Figure 5 is a block diagram showing a data generating circuit 9. In this embodiment, data is stored in a shift register 22 obtained by connecting a plurality of series-connected flip-flops FF. This shift register 22 is designed to serve as a serial-input/output type register so that data consisting of a stream of 0's and 1's is output in units of bits from the last-stage flip-flop FFn and is supplied to the terminal 2c (output terminal) as the identification code ID. Outputs from the last-stage flip-flop FFn are input to a first-stage flip-flop FF1 again so as to cyclically generate data.

The identification code data ID supplied to the terminal 2c is supplied to the anode of the diode D via a capacitor C₂ and coil L₁. As a result, the diode D connects or disconnects the power supply points 20a and 20b (4a and 4b) in accordance with the identification code ID, so that the impedance of the transmission dipole antenna 20 is changed in accordance with the identification code ID. Since a state (a phase, an amplitude, and the like) of the reflected wave 21 re-emitted from the transmission antenna 20 is changed in accordance with the identification code ID, the data generated by the data generator 9 can be transmitted receiving and demodulating the reflected wave 21 in the communicator 10.

The coil L₁ is a high-frequency choke coil and serves to prevent the reception wave 11 from flowing to the terminal 2c. In addition, a shunt capacitor C₃ is connected between the node of the capacitor C₂ and the coil L₁ and the ground so as to ground the data output line to high-frequency signals, thereby preventing the reception wave 11 from flowing to the terminal 2c.

Figure 6 is a block diagram showing a system according to the present invention capable of discriminating and identifying reflected waves from a plurality of ID tag devices. Since data transmission is performed by utilising a reflected wave of an electric wave transmitted from the communicator as described above, if a plurality of ID tag devices are present within an allowable response range of the communicator, waves reflected from these ID tag devices are simultaneously supplied to the communicator, thus causing radio interference.

In the embodiment shown in figure 6, a voltage having a sawtooth waveform is applied to a voltage-controlled oscillator (VCO) 26 so as to generate an FM wave having a gradually changing frequencies of ω₀ + Δω₀t, and the generated FM wave is transmitted from a transmission antenna 12. Assuming that the time interval between when an FM transmission wave 28 is received by each ID tag device and when a reflected wave 29 is returned to a reception antenna 13 of a communicator 31 is given as Δτ, the reception frequency at time t is given as ω₀ + Δω₀ (t - Δτ). The reception transmission waves 29 and 28 are supplied to a mixer 27 so as to obtain an output signal having a frequency difference Δω₀.Δτ corresponding to a difference between the waves 28 and 29, and supplies this signal to a frequency demodulator 30. Since the time interval Δτ required for the wave to be reflected and returned by each ID tag device is changed in accordance with a distance between the communicator 31 and the ID tag device, the frequency difference corresponding to the distance between the communicator 31 and each ID tag device can be obtained. Therefore, even when a plurality of ID tag devices are present, if the distances between the communicator 31 and the respective ID tags are different from each other, simultaneously supplied reflected waves can be separated by utilising the fact that the frequency difference Δωo·Δτ varies in each reflected wave. Accordingly, an output demodulated from a reflected wave from an ID tag device located at a specific position (Δτ is a predetermined value) can be obtained from the demodulator 30 which demodulate a specific frequency. When this output is, eg, phase-demodulated, data transmitted from the ID tag device can be regenerated.

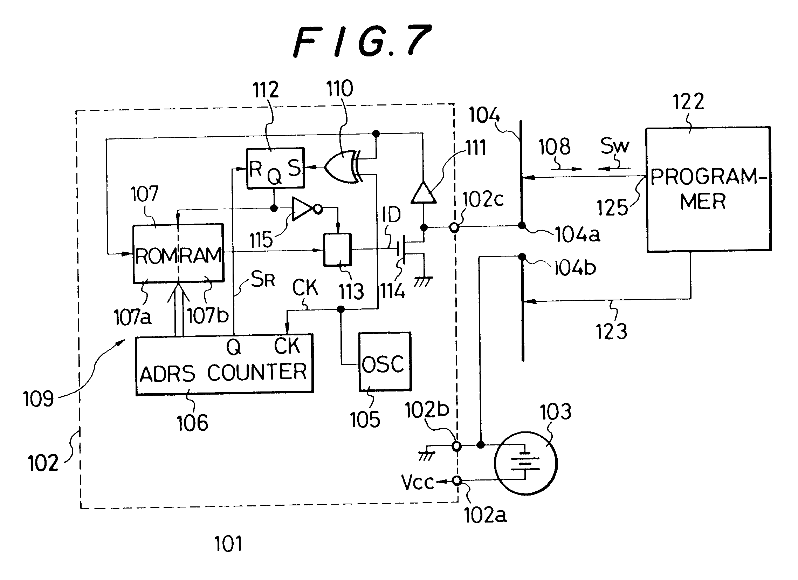

Another device which can be used as part of a further embodiment will be described below with reference to figure 7. Since the dipole antenna 104, battery 103, terminals 102a, 102b and 102c in data generating circuit 102, oscillator 105, and address counter 106, all of which are arranged in an ID tag 101, have the same functions as those described in the device shown in figure 1, a description thereof will be omitted. The memory 107 in this ID tag device is always operated in a read mode, and recognition data is supplied to the gate electrode of an FET 114 through a gate circuit 113.

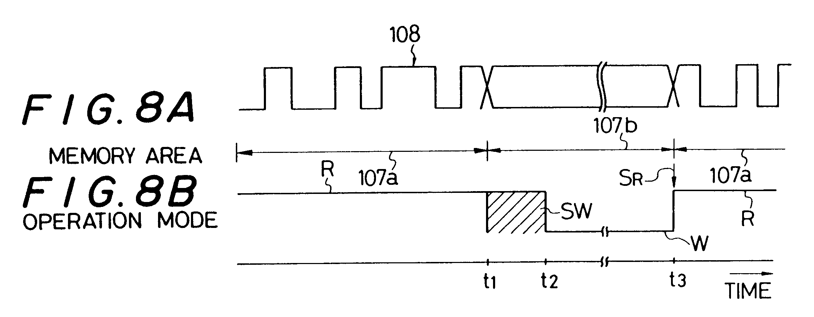

The memory 107 has a storage capacity of, eg, several hundreds of bits. The first several tens of bits of the memory 107 are used as an exclusive read area (ROM) 107a, in which a frame sync signal 108 used for regeneration of a bit clock shown in figure 8A is written. Accordingly, the area 107a constitutes a sync signal generating circuit.

A user area 107b (RAM) is arranged in a portion other than the read area 107a. When the memory 107 is switched to a write mode, arbitrary data can be written in the area 107b.

When data is to be written in the user area 107b, ground and input/output terminals 123 and 125 arranged in a programmer 122 are respectively brought into contact with the elements of the dipole antenna 104 at the ground and signal input sides so as to read the frame sync signal 108 supplied to the dipole antenna 104. The programmer 122 regenerates a bit clock ck in the data generating circuit 102 from the frame sync signal 108, and generates a data write bit block synchronised with the bit clock ck.

When the data write bit clock is generated, a predetermined code signal SW is output from the input/output terminal 125 as a signal for switching the memory circuit 107 operated in a read mode R to a write mode W at time t₁ immediately after the frame sync signal 108 is transmitted, as shown in a timing chart of figure 8B. This code signal SW may be a bit clock having a predetermined frequency. The code signal SW input from the dipole antenna 104 to the data generating circuit 102 is supplied to one input terminal of a coincidence detecting circuit 110 and the memory 107 through a buffer amplifier 111.

The coincidence detecting circuit 110 comprises an exclusive OR gate. The bit clock ck is supplied from the oscillator 105 to the other input terminal of coincidence detecting circuit 110. When identical signals are supplied to the two input terminals, a coincidence detection signal is supplied to the set terminal S of a flip-flop circuit 112. As a result, the flip-flop circuit 112 is set, and the level of a control signal output from the output terminal Q thereof is inverted, so that the memory 107 is switched from the read mode R t the write mode W at time t₂ in figure 8B. In addition, this control signal is supplied to the gate circuit 113 through an inverter 115, so that the gate circuit 113 is turned off when the memory 107 is set in the write mode. As a result, the FET 114 is turned off.

The data generating circuit 102 is operated in the write mode W in this manner. Therefore, if arbitrary data of, eg, the type of goods, a receipt number, a receipt data and a destination are transmitted from the programmer 122 upon transmission of the code signal SW, these data are sequentially written in the user area 107b.

When writing in the user are 107b is completed, the address designation count of the address counter 106 is returned to an initial value. At this time, a reset signal is output from the control output terminal Q of the address counter 106 to the reset terminal R of the flip-flop circuit 112 as a signal Search report for switching the memory circuit 107 to the read mode R. Since the flip-flop circuit 112 is reset, and the level of a control signal output from the output terminal Q is inverted, the memory 107 is switched to the read mode R at time t₃ in figure 8B and the gate circuit 113 is turned on.

When the memory 107 is operated in the read mode R, the data written in the user area 107b is read following the frame sync signal 108 written in the read area 107a. As described above, the read data is supplied to the gate electrode of the FET 114 as an identification code ID, and is transmitted from the dipole antenna 104.

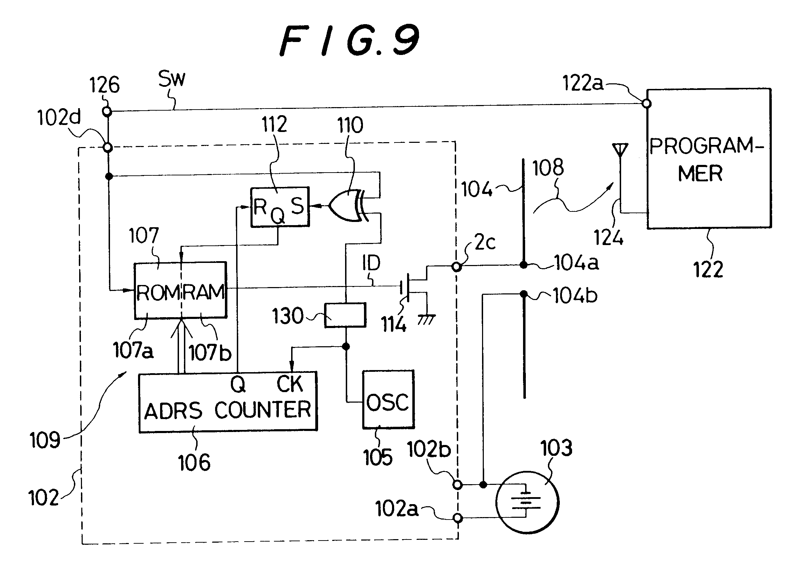

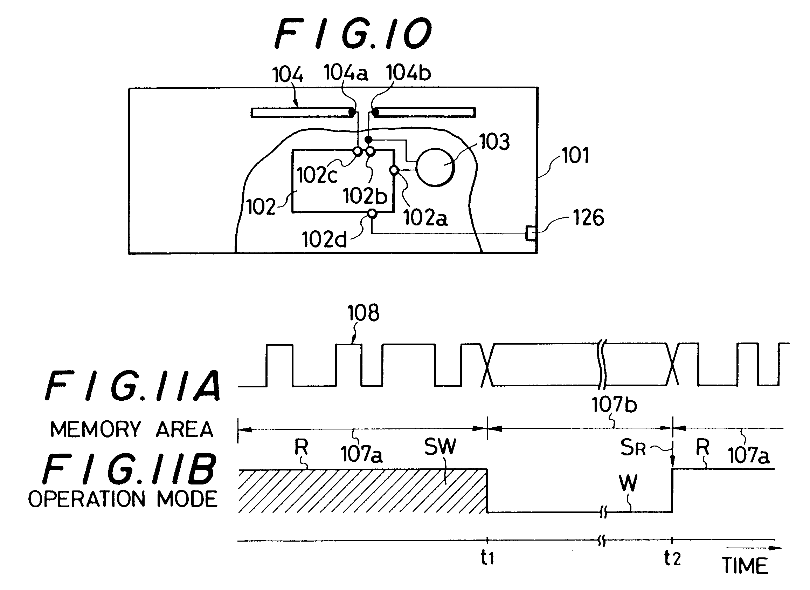

Figure 9 is a block diagram showing a data transmitter as part of still another embodiment of the present invention. In this embodiment, an independent input terminal 102d is arranged in a data generating circuit 102, and an external input terminal 126 is arranged at an end portion of a tag 101, as shown in the plan view of an ID tag device of figure 10. These terminals 102d and 126 are connected to each other. When data is to be written in this data transmitter, a frame sync signal 108 transmitted from a dipole antenna 104 is received by a reception antenna 124 mounted on a programmer 122 so as to regenerate a bit clock, and a data write bit clock of the programmer 122 is generated. Subsequently, a write terminal 122a of the programmer 122 is brought into contact with the external input terminal 126 of the ID tag device. For example, this contact operation is performed such that an insertion hole is formed in the programmer 122, and the ID tag device is inserted into this insertion hole, thereby bringing the terminals 102d and 126 into contact with each other.

This embodiment further comprises a pattern generator 130 for generating a code signal having a predetermined bit pattern on the basis of a clock output from a clock signal generator 105. A code signal generated by this generator 130 is supplied to the other input terminal of the coincidence detecting circuit 110 as a comparison reference signal. Therefore, when the memory 107 is to be switched to the write mode, a code signal having the same pattern as that of the code signal generated by the generator 130 is supplied from the programmer 122 as a switching signal SW for switching the memory 107 to the write mode.

In this embodiment, since input and output signal paths are separately arranged, an external signal can be received while data written in the memory 107 is output. The gate circuit 113 in figure 7 need not be arranged between the memory 107 and the FET 114.

In addition, since an external signal can be received while data is output, a predetermined code signal SW can be input while the frame sync signal 108 is read. Therefore, the memory 107 is switched to the write mode W at time t₁ when transmission of the frame sync signal 108 is completed.

A signal having the same bit pattern as that of the frame sync signal 108 can be used as the predetermined code signal. The comparison reference signal having this bit pattern may be generated by the pattern generator 130, or a signal written in the area 107a of the memory 107 may be used as the comparison reference signal.

A sync signal circuit may be designed so as to cause the pattern generator 130 to generate a bit pattern for a frame sync signal and periodically output it from the antenna 104. In this case, the frame sync signal 108 need not be written in the memory 107 in advance.

In addition, if a detecting circuit similar to the coincidence detecting circuit 110 is arranged, and its output is supplied to the reset terminal R of the flip-flop circuit 112, a signal Search report for switching the memory circuit 107 to the read mode can be externally input upon completion of a write operation.

As has been described above, according to the present invention, the impedance of the antenna is changed by transmission data so as to change the reflection characteristics of the antenna so that the transmission data can be carried by a reflected wave. Therefore, a transmitting circuit which generates a carrier for transmitting data and a transmission power source are not required. Consequently, a small, low-cost data transmitter which is operated by a very low power can be manufactured with a simple circuit arrangement.

In addition, when data to be transmitted is written in the memory in the transmitter, a sync signal for bit synchronisation is output by utilising an antenna for data transmission. Therefore, bit-synchronised data can be formed on the write data source side on the basis of the sync signal. Consequently, an exclusive output terminal for bit clock need nt be arranged in the transmitter.

Furthermore, when write data is supplied from the write data source subsequently after a predetermined code is supplied, the memory is switched from the read mode to the write mode upon discrimination of the code signal, thereby writing the data in the memory. Therefore, an exclusive write/read control terminal need not be arranged in the transmitter.

According to the present invention, therefore, terminals required for writing of transmission data in the memory can be eliminated, and a highly reliable low-cost data write type transmitter can be obtained.

## Claims

1. A data transfer system comprising:
an external interrogator device (10,31) comprising:
a wave generator (12,26) for generating an electric wave (11,28) and emitting the same from said interrogator device (10,31) externally, and
a comparator (13,27,30) for receiving external reflections (14,29) of said electric wave (11,28) emitted from said wave generator (12,26); and
a plurality of portable responder devices, each comprising:
an antenna (4a,4b) for reflecting said electric wave (11,28) emitted from said interrogator device (10,21),
a data generator (9) for generating data (ID) from a memory means (7,FF₁-FFₙ) within the responder device to be sent from said responder device to said interrogator device (10,31), and
means (8) for changing with time the impedance of said antenna (4a,4b) in accordance with said data (ID) generated by said data generator (9), whereby said electric wave reflected by said antenna means (4a,4b) is modulated with said data generated by said data generating means (9);
wherein said comparator (13,27,30) receives electric waves (14,29) reflected by said antennae (4a,4b) and compares the same with said electric wave (11,28) from said wave generator (26) so that said data (ID) can be derived from a result of the comparison; characterised in that
the interrogator device is operative to vary the frequency J of said electric wave periodically as a function of time t, the function being J=ω₀+Δω₀t where ω₀ and Δω₀ are constants;
and in that said comparator includes demodulating means (30) for discriminating between simultaneously received reflected waves modulated by individual ones of the responder devices according to reflected frequency.

2. A system according to claim 1, wherein said data generator (9) comprises
reading means (5, 6) for reading said data from said memory means and supplying the same to said impedance changing means (8).

3. A system according to claim 2, wherein said reading means (5, 6) comprises
oscillating means (5) for generating a clock signal and
address counter (6) means for receiving said clock signal and for determining a read address of said memory means.

4. A system according to claim 1, 2 or 3 further comprising
battery means (3) for supplying electric power to said data generator (9).

5. A system according to any one of the preceding claims, wherein said impedance changing means (8) comprises
switching means (8) having a control electrode, a first main electrode and a second main electrode, said control electrode being connected to said data generating means (9), said first main electrode being connected to said antenna means (4a) and said second main electrode being connected to ground.

6. A system according to any one of the preceding claims wherein said comparator (27, 30) is arranged to detect the frequency difference between said electric wave reflected by said antenna and the electric wave from said wave generator to detect the distance between said portable devices and said interrogator device.

7. A system according to any one of the preceding claims wherein each portable device further comprises:
generating means (107a) for generating synchronising data;
transmitting means (114, 104) for transmitting said synchronising data to said external device,
receiving means (104) for receiving information data supplied from said external device,
detecting means (110) for detecting control data supplied from said external device; and
controlling means (113) for controlling read and write operations of said memory means (107b);
wherein said information data is supplied in synchronism with said synchronising data and is rewritten in said memory means (107b) when a controlling signal from said controlling means is detected and otherwise said information data is read from said memory means (107b) and transmitted to said external device through said transmitting means.

8. A system according to claim 7, wherein said transmitting means (104) comprises said antenna means and said impedance changing means (114), said impedance changing means being arranged to change the impedance of said antenna according to said synchronising data and said information data stored in said memory means (107b), whereby said electric wave reflected by said antenna means is modulated with said synchronising data and said information data.

## Patentansprüche

1. Datenübertragungssystem, mit:
einem externen Abfragegerät (10, 31), mit:
einem Wellengenerator (12, 26) zur Erzeugung einer elektrischen Welle (11, 28) und ihrer Aussendung von dem Abfragegerät (10, 31) von außen, und
einem Komparator (13, 27, 30) zum Empfang externer Reflexionen (14, 29) der elektrischen Welle (11, 28), die vom Wellengenerator (12, 26) ausgesandt wird; und
mehreren tragbaren Antwortsendegeräten, die jeweils aufweisen:
eine Antenne (4a, 4b) zur Reflektierung der elektrischen Welle (11, 28), die vom Abfragegerät (10, 21) ausgesandt wird;
einen Datengenerator (9) zur Erzeugung von Daten (ID) aus einem Speicher (7, FF₁-FFₙ) innerhalb des Antwortsendegeräts, die vom Antwortsendegerät zum Abfragegerät (10, 31) gesendet werden sollen, und
eine Einrichtung (8) zum Ändern der Impedanz der Antenne (4a, 4b) mit der Zeit in Abhängigkeit von den Daten (ID), die durch den Datengenerator (9) erzeugt werden, wodurch die elektrische Welle, die durch die Antenne (4a, 4b) reflektiert wird, mit den Daten moduliert wird, die durch die Datenerzeugungseinrichtung (9) erzeugt werden;
wobei der Komparator (13, 27, 30) durch die Antennen reflektierte Wellen (14, 29) empfängt und diese mit der elektrischen Welle (11, 28) vom Wellengenerator (26) vergleicht, so daß die Daten (ID) aus dem Vergleichsergebnis hergeleitet werden können, dadurch gekennzeichnet, daß
das Abfragegerät die Frequenz J der elektrischen Welle periodisch als eine Funktion der Zeit t verändern kann, wobei die Funktion J = ω₀ + Δω₀t ist, wobei ω₀, und Δω₀ Konstanten sind;
und daß der Komparator eine Demodulationseinrichtung (30) zur Unterscheidung zwischen gleichzeitig empfangenen reflektierten Wellen aufweist, die durch individuelle Antwortsendegeräte gemäß der reflektierten Frequenz moduliert wurden.

2. System nach Anspruch 1, wobei der Datengenerator (9) aufweist:
eine Leseeinrichtung (5, 6) zum Lesen der Daten aus dem Speicher und Liefern dieser Daten zur Impedanzänderungseinrichtung (8).

3. System nach Anspruch 2, wobei die Leseeinrichtung (5, 6) aufweist:
einen Oszillator (5) zur Erzeugung eines Taktsignals, und
einen Adreßzähler (6) zum Empfang des Taktsignals und zur Bestimmung einer Leseadresse des Speichers.

4. System nach Anspruch 1, 2 oder 3, das außerdem aufweist:
eine Batterie (3) zum Liefern einer elektrischen Leistung zum Datengenerator (9).

5. System nach einem der vorhergehenden Ansprüche, wobei die Impedanzänderungseinrichtung (8) aufweist:
eine Schaltungseinrichtung (8) mit einer Steuerelektrode, einer ersten Hauptelektrode und einer zweiten Hauptelektrode, wobei die Steuerelektrode mit der Datenerzeugungseinrichtung (9) verbunden ist, wobei die erste Hauptelektrode mit der Antenne (4a) und die zweite Hauptelektrode mit Erde verbunden ist.

6. System nach einem der vorhergehenden Ansprüche, wobei der Komparator (27, 30) den Frequenzunterschied zwischen der elektrischen Welle, die von der Antenne reflektiert wird, und der elektrischen Welle vom Wellengenerator ermitteln kann, um den Abstand zwischen den tragbaren Geräten und dem Abfragegerät zu ermitteln.

7. System nach einem der vorhergehenden Ansprüche, wobei jedes tragbare Gerät außerdem aufweist:
eine Erzeugungseinrichtung (107a) zur Erzeugung von Synchronisationsdaten;
eine Übertragungseinrichtung (114, 104) zur Übertragung der Synchronisationsdaten zum externen Gerät;
eine Empfangseinrichtung (104) zum Empfang von Informationsdaten, die von dem externen Gerät geliefert werden;
eine Ermittlungseinrichtung (110) zur Ermittlung von Steuerdaten, die von dem externen Gerät geliefert wurden; und
eine Steuereinrichtung (113) zur Steuerung von Lese- und Schreiboperationen des Speichers (107b);
wobei die Informationsdaten synchron mit den Synchronisationsdaten geliefert werden und in den Speicher (107b) wieder eingeschrieben werden, wenn ein Steuersignal von der Steuereinrichtung ermittelt wird, und wobei sonst die Informationsdaten aus dem Speicher (107b) gelesen und zum externen Gerät über die Übertragungseinrichtung übertragen werden.

8. System nach Anspruch 7, wobei die Übertragungseinrichtung (104) eine Antenne und eine Impedanzänderungseinrichtung (114) aufweist, wobei die Impedanzänderungseinrichtung die Impedanz der Antenne in Abhängigkeit von den Synchronisationsdaten und die Informationsdaten, die im Speicher (107b) gespeichert sind, ändern kann, wodurch die elektrische Welle, die von der Antenne reflektiert wird, mit den Synchronisationsdaten und den Informationsdaten moduliert wird.

## Revendications

1. Système de transfert de données comprenant :
un dispositif d'interrogateur externe (10, 31) comprenant :
un générateur d'onde (12, 26) pour générer une onde électrique (11, 28) et pour émettre celle-ci depuis ledit dispositif d'interrogateur (10, 31) de façon externe ; et
un comparateur (13, 27, 30) pour recevoir des réflexions externes (14, 29) de ladite onde électrique (11, 28) émise depuis ledit générateur d'onde (12, 26) ; et
une pluralité de dispositifs de répondeur portables, chacun comprenant :
une antenne (4a, 4b) pour réfléchir ladite onde électrique (11, 28) émise depuis ledit dispositif d'interrogateur (10, 21) ;
un générateur de données (9) pour générer des données (ID) depuis un moyen de mémoire (7, FF₁ - FFₙ) dans le dispositif de répondeur pour qu'elles soient envoyées depuis ledit dispositif de répondeur sur ledit dispositif d'interrogateur (10, 31) ; et
un moyen (8) pour modifier en fonction du temps l'impédance de ladite antenne (4a, 4b) conformément auxdites données (ID) générées par ledit générateur de données (9) de telle sorte que ladite onde électrique réfléchie par ledit moyen d'antenne (4a, 4b) soit modulée avec lesdites données générées par ledit moyen de génération de données (9),
dans lequel ledit comparateur (13, 27, 30) reçoit des ondes électriques (14, 29) réfléchies par ladite antenne (4a, 4b) et les compare à ladite onde électrique (11, 28) provenant dudit générateur d'onde (26) de telle sorte que lesdites données (ID) puissent être dérivées d'un résultat de la comparaison,
caractérisé en ce que :
le dispositif d'interrogateur fonctionne pour faire varier la fréquence J de ladite onde électrique périodiquement en fonction du temps t, la fonction étant J = ω₀+Δω₀t où ω₀ et Δω₀ sont des constantes ; et en ce que
ledit comparateur inclut un moyen de démodulation (30) pour réaliser une discrimination entre des ondes réfléchies reçues simultanément qui sont modulées par certains individuels des dispositifs de répondeur conformément à une fréquence réfléchie.

2. Système selon la revendication 1, dans lequel ledit générateur de données (9) comprend :
un moyen de lecture (5, 6) pour lire lesdites données dans ledit moyen de mémoire et pour les appliquer sur ledit moyen de modification d'impédance (8).

3. Système selon la revendication 2, dans lequel ledit moyen de lecture (5, 6) comprend :
un moyen d'oscillation (5) pour générer un signal d'horloge ; et
un moyen de compteur d'adresse (6) pour recevoir ledit signal d'horloge et pour déterminer une adresse de lecture dudit moyen de mémoire.

4. Système selon la revendication 1, 2 ou 3, comprenant en outre :
un moyen de pile (3) pour appliquer de l'énergie électrique audit générateur de données (9).

5. Système selon l'une quelconque des revendications précédentes, dans lequel ledit moyen de modification d'impédance (8) comprend :
un moyen de commutation (8) comportant une électrode de commande, une première électrode principale et une seconde électrode principale, ladite électrode de commande étant connectée audit moyen de génération de données (9), ladite première électrode principale étant connectée audit moyen d'antenne (4a) et ladite seconde électrode principale étant connectée à la masse.

6. Système selon l'une quelconque des revendications précédentes, dans lequel ledit comparateur (27, 30) est agencé pour détecter la différence de fréquence entre ladite onde électrique réfléchie par ladite antenne et l'onde électrique provenant dudit générateur d'onde pour détecter la distance entre lesdits dispositifs portables et ledit dispositif d'interrogateur.

7. Système selon l'une quelconque des revendications précédentes, dans lequel chaque dispositif portable comprend en outre :
un moyen de génération (107a) pour générer des données de synchronisation ;
un moyen d'émission (114, 104) pour émettre lesdites données de synchronisation sur ledit dispositif externe ;
un moyen de réception (104) pour recevoir des données d'information appliquées depuis ledit dispositif externe ;
un moyen de détection (110) pour détecter des données de commande appliquées depuis ledit dispositif externe ; et
un moyen de commande (113) pour commander des opérations de lecture et d'écriture dudit moyen de mémoire (107b),
dans lequel lesdites données d'information sont appliquées en synchronisation avec lesdites données de synchronisation et sont ré-écrites dans ledit moyen de mémoire (107b) lorsqu'un signal de commande provenant dudit moyen de commande est détecté et sinon, lesdites données d'information sont lues dans ledit moyen de mémoire (107b) et sont émises sur ledit dispositif externe par l'intermédiaire dudit moyen d'émission.

8. Système selon la revendication 7, dans lequel ledit moyen d'émission (104) comprend ledit moyen d'antenne et ledit moyen de modification d'impédance (114), ledit moyen de modification d'impédance étant agencé pour modifier l'impédance de ladite antenne conformément auxdites données de synchronisation et auxdites données d'information stockées dans ledit moyen de mémoire (107b) de telle sorte que ladite onde électrique réfléchie par ledit moyen d'antenne soit modulée avec lesdites données de synchronisation et avec lesdites données d'information.
